# EUROPÄISCHE PATENTSCHRIFT

(11) **EP 3 358 477 B1**
(45) Veröffentlichungstag und Bekanntmachung des Hinweises auf die Patenterteilung: **13.04.2022**
(21) Anmeldenummer: 18154914.8
(22) Anmeldetag: 02.02.2018
(51) Int. Cl.: G06K 7/14, B42D 15/08, G06K 19/00, H04N 1/21, H04N 1/00, G06F 3/06

(54) **DATENVERWALTUNGSSYSTEM**
DATA MANAGEMENT SYSTEM
SYSTÈME DE GESTION DE DONNÉES

(30) Priorität: 03.02.2017 DE 102017102125; 24.02.2017 DE 102017103824
(43) Veröffentlichungstag der Anmeldung: 08.08.2018
(73) Patentinhaber: ThePeople.de GmbH, 74223 Flein (DE)
(72) Erfinder: NÄGELE, Carl Michael, 74223 Flein (DE); FISCHER, Rudolf Andreas, 74223 Flein (DE)
(74) Vertreter: Raible Deissler Lehmann Patentanwälte PartG mbB

(56) Entgegenhaltungen:
- EP-A1- 2 735 976
- JP-A- 2010 250 622
- US-A- 6 081 827
- US-A1- 2005 277 405

## Beschreibung

Die vorgestellte Erfindung betrifft ein Verfahren zur Zuordnung mindestens eines digitalen Speicherorts zu einem physischen Informationsträger und ein Datenverwaltungssystem.

In einem Archiv werden Daten mittels Akten in Form von bspw. Ordnern oder Heftern organisiert. Um in einem solchen Archiv geordnete Daten schnell zu finden und zu verwalten, werden die Daten in der Regel digitalisiert und in einem digitalen Speicher gesichert.

Um eine physische Akte, d. h. bspw. einen mit Formularen gefüllten Ordner, einem entsprechenden virtuellen Ordner in einem digitalen Speicher zuzuordnen, muss die physische Akte identifiziert und dem virtuellen Ordner eindeutig zugeordnet werden. Dazu werden gemäß dem Stand der Technik Verfahren eingesetzt, bei denen aufwendig, d. h. insbesondere in einem manuellen Prozess, eine Kennung der physischen Akte einer Kennung des virtuellen Ordners zugewiesen wird. Entsprechend muss zum Auffinden der Akte in dem digitalen Speicher die Kennung des entsprechenden Ordners bekannt sein bzw. muss zum Auffinden der Akte in einem Archiv die Kennung der Akte bekannt sein.

Insbesondere in großen Archiven, in denen mehrere Mitarbeiter entsprechende Akten verwalten, kann es bei einer manuellen Zuordnung von Akten zu entsprechenden Ordnern zu Situationen kommen, in denen ein Kennung für eine Akte fehlerhaft zugeordnet und bspw. doppelt vergeben wird oder aufgrund einer fehlerhaften Zuordnung ein Ordner in einem Speicher nicht mehr gefunden werden kann, wodurch Informationen verloren gehen.

EP 2 735 976 A1 der Firma "ThePeople GmbH", betrifft ein codebasiertes Informationssystem für mindestens eine mobile Kommunikationseinheit, durch das individuelle Daten einem Code zuzuordnen sind, indem eine Zuordnung des Codes zu den individuellen Daten auf eine als Server dienende zentrale Datenbank übertragen und dort hinterlegt wird.

Vor diesem Hintergrund wird ein Verfahren zur Zuordnung mindestens eines digitalen Speicherorts zu einem physischen Informationsträger gemäß den beigefügten Ansprüchen vorgestellt.

Gemäß dem vorgestellten Verfahren ist vorgesehen, dass unter Verwendung einer auf mindestens einer tragbaren Recheneinheit ausgeführten Applikation mindestens ein Speicherort auf einem über eine Kommunikationsschnittstelle mit der mindestens einen tragbaren Recheneinheit in Verbindung stehenden Server angefordert wird. Weiterhin ist vorgesehen, dass von dem Server dem mindestens einen Speicherort eine eindeutige Kennung zugeordnet wird, und der eindeutigen Kennung mindestens ein Muster zugeordnet wird, das händisch auf eine Oberfläche eines physischen Informationsträgers aufzubringen ist. Dabei ist ferner vorgesehen, dass das mindestens eine Muster von einem Nutzer händisch auf eine Oberfläche eines jeweiligen physischen Informationsträgers aufgebracht wird, wodurch der mindestens eine Speicherort auf dem Server mit dem physischen Informationsträger verbunden wird, und, wenn das mindestens eine Muster unter Verwendung mindestens eines Sensors der mindestens einen tragbaren Recheneinheit vom physischen Informationsträger erfasst und erkannt wird, die eindeutige Kennung von dem Server heruntergeladen wird, und mittels der mindestens einen tragbaren Recheneinheit unter Verwendung der eindeutigen Kennung auf den mindestens einen Speicherort zugegriffen wird.

Ausgestaltungen der vorgestellten Erfindung ergeben sich aus der Beschreibung und den abhängigen Ansprüchen.

Das vorgestellte Verfahren dient in einer möglichen Ausgestaltung zum automatischen Verwalten von Daten in einem Archiv, das sowohl einen digitalen Speicher als auch einen Lagerraum zum Lagern physischer Akten umfasst. Gemäß dem vorgestellten Verfahren ist vorgesehen, dass einem physischen Informationsträger, d. h. bspw. einer Akte, in einem automatischen Prozess ein digitaler Speicherort zugeordnet wird. Dabei ist vorgesehen, dass die Zuordnung des physischen Informationsträgers zu dem entsprechenden digitalen Speicherort zentral von einem Server unter Verwendung einer eindeutigen Kennung verwaltet wird, so dass fehlerhafte Zuordnungen von physischen Informationsträgern zu Speicherorten, bspw. aufgrund einer doppelten Vergabe einer Kennung, vermieden werden.

Gemäß dem vorgestellten Verfahren ist es vorgesehen, dass mindestens eine tragbare Recheneinheit mittels einer auf der tragbaren Recheneinheit ausgeführten Applikation dazu konfiguriert wird, von einem mit der tragbaren Recheneinheit über eine Kommunikationsschnittstelle in kommunikativer Verbindung stehenden Server einen Speicherort anzufordern. Dazu kann die mindestens eine tragbare Recheneinheit, die bspw. ein Smartphone, ein Laptop, ein Handheld, ein Wearable, eine Smartwatch, ein Smartglass, ein Tablet-PC oder jedes weitere zur Kommunikation mit einem Server geeignete tragbare Gerät sein. Die tragbare Recheneinheit ist dazu konfiguriert, mit dem Server über eine Kommunikationsschnittstelle, wie bspw. ein Mobilfunknetzwerk, ein WLAN-basiertes Netzwerk, eine Bluetoothverbindung, eine Nearfield Communication Verbindung, ein Kabel oder jede weitere zum Übertragen von Daten geeignete Kommunikationsschnittstelle, Daten austauschen. Die mindestens eine tragbare Recheneinheit kann insbesondere ein mobiles Endgerät mit einer Anzeigeeinheit und/oder einer Kamerafunktion und/oder einem kapazitativen Sensor und/oder einem Mikrofon und/oder einem Lautsprecher und/oder einem GPS-Sensor und/oder einer NFC-Funktion sein. Es ist denkbar, dass eine einzelne tragbare Recheneinheit zum Bereitstellen eines Musters und zum Zugriff auf einen entsprechenden Speicherort gewählt wird. Selbstverständlich ist es auch denkbar, dass das Muster mittels einer ersten tragbaren Recheneinheit bereitgestellt wird und der Zugriff auf einen entsprechenden Speicherort mittels einer zweiten, einer dritten oder einer beliebig weiteren zu der Recheneinheit unterschiedlichen Recheneinheit erfolgt.

Die erfindungsgemäß vorgesehene Applikation konfiguriert die erfindungsgemäß vorgesehene tragbare Recheneinheit zur Durchführung des erfindungsgemäßen Verfahrens, so dass mittels der Applikation jeweilige zur Durchführung des erfindungsgemäßen Verfahrens erforderliche Steuerbefehle an eine jeweilige tragbare Recheneinheit und, dadurch bedingt, ggf. an den erfindungsgemäß vorgesehenen Server übermittelt werden können.

Unter einer Oberfläche eines physischen Informationsträgers ist im Kontext der vorliegenden Erfindung bspw. ein Papier, ein Aktenordner, eine Mappe oder eine Hülle, insbesondere eine Klarsichthülle zu verstehen.

In einer weiteren möglichen Ausgestaltung des vorgestellten Verfahrens ist vorgesehen, dass der mindestens eine Speicherort durch die mindestens eine tragbare Recheneinheit von dem Server in Reaktion auf einen Erfassungsvorgang eines Markers durch die tragbare Recheneinheit angefordert wird.

Es ist denkbar, dass eine jeweilige tragbare Recheneinheit unter Verwendung der auf der tragbaren Recheneinheit ausgeführten Applikation durch einen Marker, wie bspw. einen Code, bevorzugt einen Matrixcode, insbesondere bevorzugt einen QR-Code oder ein vorgegebenes Muster, wie bspw. ein Bild, dazu konfiguriert wird, automatisch einen Speicherort auf dem erfindungsgemäß vorgesehenen Server anzufordern. Dazu ist vorgesehen, dass der Marker mittels eines Sensors der tragbaren Recheneinheit, wie bspw. einem bildgebenden Sensor, insbesondere einer Kamera, erfasst wird. Dies bedeutet, dass das vorgestellte Verfahren durch einen Scanvorgang eines Markers gestartet werden kann.

Insbesondere ist vorgesehen, dass der Marker eine zum Bereitstellen des erfindungsgemäß vorgesehenen Musters auf einer Oberfläche eines jeweiligen physischen Informationsträgers vorgesehene Vorlage ist. Dies bedeutet, dass die Vorlage mittels eines Sensors erfasst und zum Starten des vorgestellten Verfahrens bzw. zum Anfordern des mindestens einen erfindungsgemäß vorgesehenen Speicherorts verwendet werden kann.

In Ausgestaltung des vorgestellten Verfahrens kann ein jeweiliger Marker, insbesondere ein als Vorlage ausgestalteter Marker, eine Vielzahl Markierungen umfassen. Diese Markierungen können bei einem Erfassungsvorgang des Markers verwendet werden, um dessen Ausrichtung zu erfassen. So kann bspw. durch eine erste Markierung an einem linken oberen Rand eines Markers und eine zweite Markierung an einem rechten unteren Rand des Markers festgestellt werden, wo sich ein oberer Rand bzw. ein unterer Rand des Markers und/oder wo sich eine linke Seite bzw. eine rechte Seite des Markers befindet. Dabei kann vorgesehen sein, dass jeweilige Markierungen eines Markers einem jeweiligen Nutzer zugeordnet werden, so dass anhand bspw. einer speziellen Form oder einer speziellen Position jeweiliger Markierungen auf einen jeweiligen Nutzer eines dem Marker zugeordneten physischen Informationsträgers, wie bspw. einen Hersteller des physischen Informationsträgers, geschlossen werden kann. Dies bedeutet, dass anhand jeweiliger an einem Marker vorgesehener Markierungen ein Nutzer von bspw. einem Ordner, auf dem der Marker angeordnet ist, erkannt werden kann, so dass bspw. der erfindungsgemäß vorgesehene Server und/oder die erfindungsgemäß vorgesehene tragbare Recheneinheit unter Berücksichtigung von ggf. vorhandenen Informationen über den Nutzer konfiguriert werden können. Die Markierungen können derart ausgestaltet sein, dass diese von einem Menschen nicht als Markierungen erkannt werden können, jedoch mittels eines Sensors erfasst und von einer Recheneinheit als Markierungen erkannt werden können.

Weiterhin ist denkbar, dass zum Anfordern eines jeweiligen Speicherorts mittels einer jeweiligen tragbaren Recheneinheit eine Bezeichnung vorgegeben werden kann, mittels derer der Speicherort bezeichnet werden soll. Bspw. kann vorgesehen sein, dass ein Nutzer mittels der tragbaren Recheneinheit eine Bezeichnung für einen Speicherort auf dem erfindungsgemäß vorgesehenen Server in seine tragbare Recheneinheit eingibt, woraufhin die tragbare Recheneinheit die Bezeichnung an den Server übermittelt und gleichzeitig einen Speicherort auf dem Server anfordert.

Erfindungsgemäß ist vorgesehen, dass, sobald in Reaktion auf eine Anforderung für einen Speicherort, die von einer jeweiligen tragbaren Recheneinheit übermittelt wurde, mindestens ein Speicherort von dem Server ausgewählt und dem mindestens einen Speicherort eine eindeutige Kennung zugewiesen wird. Diese eindeutige Kennung dient der Zuordnung des mindestens einen Speicherorts zu einem jeweiligen physischen Informationsträger.

Zur Zuordnung der eindeutigen Kennung des mindestens einen Speicherorts zu dem physischen Informationsträger ist vorgesehen, dass der eindeutigen Kennung ein Muster, das händisch auf eine Oberfläche des physischen Informationsträgers aufzubringen ist, zugeordnet wird. Dieses Muster wird einem Nutzer präsentiert, so dass der Nutzer das Muster auf einer Oberfläche des physischen Informationsträgers, wie bspw. einem Ordnerrücken aufbringen bzw. das Muster auf die Oberfläche übertragen kann.

Mittels eines händischen Musters kann ein physischer Informationsträger schnell und einfach einem Speicherort zugeordnet werden, insbesondere ohne, dass aufwendige Etiketten gedruckt und aufgeklebt werden müssen. Entsprechend eignet sich das vorgestellte Verfahren besonders vorteilhaft zum Verwalten einer Vielzahl physischer Informationsträger bspw. in einem Archiv.

Zum Aufbringen bzw. Übertragen des erfindungsgemäß vorgesehenen Musters auf eine Oberfläche eines jeweiligen physischen Informationsträgers bringt ein Nutzer das Muster mittels eines Schreibgeräts oder mittels jeder weiteren zum Erzeugen eines Musters geeigneten Vorrichtung, wie einem Pinsel oder einem Ritzwerkzeug, auf der Oberfläche des physischen Informationsträgers auf.

Es ist weiterhin in Ausgestaltung des vorgestellten Verfahrens denkbar, dass das Muster von dem Server als Druckvorlage versendet, ausgedruckt und händisch auf die Oberfläche des physischen Informationsträgers aufgebracht wird. Selbstverständlich kann es auch vorgesehen sein, dass das Muster mittels eines einstellbaren Stempels auf die Oberfläche des physischen Informationsträgers aufgebracht wird.

Unter einem händisch aufzubringenden Muster ist im Kontext der vorgestellten Erfindung ein Muster zu verstehen, das manuell mittels eines Schreibgeräts auf eine Oberfläche eines physischen Informationsträgers zu zeichnen bzw. zu schreiben ist. Es ist denkbar, dass das Muster aus einer Vielzahl Bereiche besteht, die in eine Vorlage eingezeichnet bzw. übertagen werden. Es kann bspw. vorgesehen sein, dass die Vorlage sich über eine Fläche von höchstens 9 Quadratzentimetern auf einer Oberfläche eines jeweiligen physischen Informationsträgers erstreckt. Dabei kann ein in der Vorlage vorgesehener Bereich, in den ein jeweiliger Bereich des Musters zu übertragen ist, insbesondere an einer Seite eine Kantenlänge von höchstens 3 mm oder eine Fläche von 9 Quadratmillimetern aufweisen, so dass ein gewöhnlicher Nutzer ein Feld ausfüllen kann, ohne ein benachbartes Feld auszufüllen bzw. zu markieren und die Vorlage bzw. des Muster geeignet ist, auf einen Orderrücken eines Ordners mit einem 5 cm breiten Rücken aufgebracht zu werden. Entsprechend wird dem Nutzer das Muster derart präsentiert, d. h. auf einer Ausgabeeinheit, wie bspw. einer Anzeige ausgegeben, dass der Nutzer ein mittels der Ausgabeeinheit ausgegebenes Muster als physisches Muster auf eine Oberfläche eines jeweiligen physischen Informationsträgers übertragen kann.

Es ist denkbar, dass die Vorlage in Form eines Rechtecks, einer Raute, einer Wabe, eines Quadrats, eines Kreises oder jeder weiteren zum Übertragen eines Musters geeigneten Form bereitgestellt wird. Entsprechend können jeweilige in der Vorlage vorgesehene Bereiche ebenfalls in Form eines Rechtecks, einer Raute, einer Wabe, eines Quadrats, eines Kreises oder jeder weiteren zum Übertragen eines Musters geeigneten Form bereitgestellt werden.

Da das Muster der eindeutigen Kennung zugeordnet ist, ordnet das physische auf einer Oberfläche eines jeweiligen physischen Informationsträgers aufgebrachte Muster den physischen Informationsträger der eindeutigen Kennung und entsprechend dem mindestens einen der eindeutigen Kennung zugeordneten Speicherort zu.

Um unter Verwendung eines auf einer Oberfläche eines jeweiligen physischen Informationsträgers angeordneten Musters auf einen dem physischen Informationsträger mittels des Musters zugeordneten Speicherort zuzugreifen und bspw. auf dem Speicherort hinterlegte Daten einzusehen bzw. zu editieren, ist erfindungsgemäß vorgesehen, dass das mindestens eine Muster unter Verwendung mindestens eines Sensors der mindestens einen erfindungsgemäß vorgesehenen tragbaren Recheneinheit erfasst wird, die Zuordnung des mindestens einen Speicherorts zu der eindeutigen Kennung von dem Server heruntergeladen und an dem mindestens einen Speicherort hinterlegte Informationen zur Bearbeitung oder zur Einsicht auf einer Anzeigeeinheit dargestellt werden. Dabei kann die Zuordnung des mindestens einen Speicherorts zu der eindeutigen Kennung in Form einer Datei auf dem Server hinterlegt sein.

Gemäß dem vorgestellten Verfahren ist insbesondere vorgesehen, dass digitale Inhalte derart auf dem Speicherort hinterlegt werden, dass ein späterer Zugriff bzw. Aufruf der digitalen Inhalte von dem Speicherort mittels einer jeweiligen tragbaren Recheneinheit möglich ist. Zum Hinzufügen von digitalen Inhalten, wie bspw. Bildern, Texten, PDF-Dateien, Videodateien, Skizzen oder Zeichnungen zu einem jeweiligen Speicherort, der einem jeweiligen physischen Informationsträger zugewiesenen ist, wird ein auf einer Oberfläche des physischen Informationsträgers vorgesehenes Muster mittels eines Sensors einer zur Durchführung des vorgestellten Verfahrens konfigurierten tragbaren Recheneinheit erfasst und unter Angabe des Musters bzw. einer dem Muster entsprechenden eindeutigen Kennung zusammen mit entsprechenden digitalen Inhalten an den erfindungsgemäß vorgesehenen Server übermittelt. Dabei kann vorgesehen sein, dass den digitalen Inhalten ein Datum zugeordnet wird, nach dessen Erreichen die digitalen Inhalte auf dem Server zu löschen sind.

Beim Zugriff auf einen jeweiligen Speicherort unter Verwendung des vorgestellten Verfahrens ist insbesondere vorgesehene, das eine Struktur des Speicherortes, d. h. ggf. auf dem Speicherort vorhandene Ordnerstrukturen auf einer zum Zugriff auf den Speicherort verwendeten Recheneinheit dargestellt werden. Diese Struktur kann bspw. unter Verwendung der zum Zugriff auf den Speicherort verwendeten Recheneinheit verändert, d. h. bspw. ergänzt oder reduziert werden.

In einer möglichen Ausgestaltung des vorgestellten Verfahrens ist vorgesehen, dass ein Zugriff der mindestens einen tragbaren Recheneinheit auf den Server lediglich dann ermöglicht wird, wenn eine mittels eines Ortungssystems ermittelte Position der mindestens einen tragbaren Recheneinheit mit einer Position aus einer vorgegebenen Liste an Positionen übereinstimmt.

Es ist denkbar, dass eine Möglichkeit zum Hinzufügen bzw. zum Betrachten und/oder Editieren von digitalen Inhalten zu bzw. auf einem Speicherort des erfindungsgemäß vorgesehenen Servers beschränkt wird, indem eine Position einer jeweiligen auf den Speicherort zugreifenden Recheneinheit bestimmt und mit einer vorgegebenen Liste an zulässigen Positionen abgeglichen wird. Zum Erfassen der Position der Recheneinheit kann bspw. ein GPS-Sensor der Recheneinheit, ein WLAN-Signal oder eine Nearfield Communication Verbindung, bereitgestellt durch entsprechende Beacons, verwendet werden. So dass bspw. lediglich dann ein Zugriff auf den Speicherort erfolgen kann, wenn die Recheneinheit sich in einer Position befindet, in der die Recheneinheit mit einem Nearfield Communication Beacon Informationen austauscht.

In einer weiteren möglichen Ausgestaltung des vorgestellten Verfahrens ist vorgesehen, dass ein Nutzer für einen Zugriff auf die Applikation und/oder den Server mittels der mindestens einen tragbaren Recheneinheit unter Verwendung eines Authentifizierungsverfahrens der folgenden Liste an Authentifizierungsverfahren oder einer Kombination daraus authentifiziert wird: Erfassen biometrischer Merkmale des Nutzers, Erfassen einer Irisstruktur des Nutzers, Erfassen eines Fingerabdrucks des Nutzers, Erfassen von Sprachmerkmalen des Nutzers, Erfassen von Gesichtsmerkmalen des Nutzers, Abfragen eines Identifikationsschlüssels und Abfragen eines mittels eines Datenträgers bereitzustellenden digitalen Schlüssels.

In einer weiteren möglichen Ausgestaltung des vorgestellten Verfahrens ist vorgesehen, dass lediglich Nutzern aus einer vorgegebenen Liste an Nutzern ein Zugriff auf den Speicherort unter Verwendung des mindestens einen Musters gestattet wird.

Selbstverständlich kann ein Zugriff auf den Speicherort auch durch bspw. einen Administrator auf bestimmte in einer Liste vorgegebene Personen beschränkt werden. Dazu kann vorgesehen sein, dass sich jeweilige auf den Speicherort zugreifende Personen bspw. mittels eines Passworts und/oder einem biometrischen Merkmal, wie bspw. einem Fingerabdruck oder einem Irismuster gegenüber dem Server authentifizieren müssen.

Weiterhin ist denkbar, dass ein Zugriff auf den Speicherort auch durch bspw. einen Administrator auf bestimmte in einer Liste vorgegebene Zeiten beschränkt werden kann. Dies bedeutet, dass lediglich zu vorgegebenen Zeiten, bspw. zu Öffnungszeiten eines Büros, auf den Speicherort zugegriffen werden kann bzw. jeweilige auf dem Speicherort hinterlegte Dokumente editiert werden können.

Erfindungsgemäß ist vorgesehen, dass das mindestens eine Muster von dem Server mittels eines vorgegebenen Zuordnungsschemas unter Verwendung der eindeutigen Kennung erzeugt und an die mindestens eine den mindestens einen Speicherort anfordernde tragbare Recheneinheit übertragen wird oder die eindeutige Kennung von dem Server zu der mindestens einen den Speicherort anfordernden tragbaren Recheneinheit übertragen und von der tragbaren Recheneinheit unter Verwendung der eindeutigen Kennung und des vorgegebenen Zuordnungsschemas das Muster erzeugt wird.

Es ist insbesondere vorgesehen, dass das erfindungsgemäß vorgesehene Muster von dem Server unter Verwendung einer jeweiligen von dem Server erzeugten eindeutigen Kennung erzeugt wird. Dazu kann der Server bspw. eine Kennzahl der eindeutigen Kennung, wie bspw. eine Quersumme oder eine Prüfziffer der eindeutigen Kennung gemäß einem vorgegebenen Zuordnungsschema zum Erzeugen eines Musters, insbesondere eines grafischen Musters, nutzen. Durch das Zuordnungsschema wird die eindeutige Kennung einem entsprechenden Muster fest zugeordnet, so dass von dem Muster auf die eindeutige Kennung und von der eindeutigen Kennung auf das Muster geschlossen werden kann, wenn das Zuordnungsschema bekannt ist.

Für den Fall, dass ein jeweiliges Muster von einem jeweiligen Server erzeugt wird, kann es vorgesehen sein, dass lediglich das Muster zu einer entsprechenden tragbaren Recheneinheit übertragen wird, so dass die eindeutige Kennung an sich ausschließlich auf dem Server hinterlegt ist.

Alternativ ist erfindungsgemäß vorgesehen, dass die eindeutige Kennung von dem Server zu der den mindestens einen Speicherort anfordernden mindestens einen tragbaren Recheneinheit übertragen wird und von der mindestens einen tragbaren Recheneinheit unter Verwendung der eindeutigen Kennung und des vorgegebenen Zuordnungsschemas das mindestens eine Muster erzeugt wird.

Selbstverständlich kann es auch vorgesehen sein, dass eine jeweilige tragbare Recheneinheit zum Erzeugen eines jeweiligen Musters verwendet wird. Dazu kann der Server ein jeweiliges Zuordnungsschema zusammen mit der eindeutigen Kennung zu der tragbaren Recheneinheit übertragen. Alternativ kann das Zuordnungsschema bereits auf der tragbaren Recheneinheit gespeichert sein. Es ist denkbar, dass auf der tragbaren Recheneinheit verschiedene Zuordnungsschemata hinterlegt sind und der Server zusammen mit der eindeutigen Kennung einen Hinweis an die tragbare Recheneinheit übermittelt, welches Zuordnungsschema zum Erzeugen des Musters zu verwenden ist.

Um eine dynamische Speicherverwaltung des erfindungsgemäß vorgesehenen Servers zu ermöglichen, kann es vorgesehen sein, dass ein Speicherort, auf dem Informationen zu einem physischen Informationsträger hinterlegt sind, verändert wird und bspw. auf ein neues Laufwerk verlegt wird. Um die Zuordnung des Speicherorts auf dem neuen Laufwerk zu einem jeweiligen Muster bzw. zu einer jeweiligen eindeutigen Kennung weiterhin aufrecht zu erhalten, kann auf dem Server ein Protokoll hinterlegt werden, das der eindeutigen Kennung den Speicherort auf dem neuen Laufwerk zuordnet, wenn mittels einer jeweiligen tragbaren Recheneinheit unter Verwendung der eindeutigen Kennung auf den Speicherort zugegriffen werden soll. Dazu kann bspw. eine als Zuordnung hinterlegte Datei auf dem Server aktualisiert bzw. ergänzt werden.

In einer weiteren möglichen Ausgestaltung des vorgestellten Verfahrens ist vorgesehen, dass, nachdem das mindestens eine Muster auf die Oberfläche des physischen Informationsträgers aufgebracht wurde, das mindestens eine Muster mittels des mindestens einen Sensors der mindestens einen tragbaren Recheneinheit erfasst und mit dem der eindeutigen Kennung zugeordneten mindestens einen Muster zur Verifikation abgeglichen wird. Dabei ist weiterhin vorgesehen, dass für den Fall, dass das mindestens eine mittels des mindestens einen Sensors erfasste Muster von dem der eindeutigen Kennung zugeordneten mindestens einen Muster derart abweicht, dass eine Zuordnung des mittels des mindestens einen Sensors erfassten Musters zu der eindeutigen Kennung fehlerhaft verläuft, durch die mindestens eine tragbare Recheneinheit von dem Server eine neue eindeutige Kennung angefordert wird.

Es ist vorgesehen, dass der Server die neue eindeutige Kennung derart wählt, dass dieser mindestens ein neues Muster zugeordnet werden kann, das unter Verwendung des mittels des mindestens einen Sensors erfassten mindestens einen Musters zu erzeugen ist. Dies bedeutet, dass ein jeweiliges mittels des mindestens einen Sensors erfasstes Muster in ein jeweiliges neues Muster integriert bzw. aufgenommen wird und zusammen mit das mittels des mindestens einen Sensors erfasste Muster ergänzenden Teilen das neue Muster bildet. Ferner ist vorgesehen, dass unter Verwendung des mittels des mindestens einen Sensors erfassten mindestens einen Musters der neuen eindeutigen Kennung mindestens ein neues Muster zugeordnet wird und das mindestens eine auf die Oberfläche des physischen Informationsträgers aufgebrachte Muster entsprechend dem mindestens einen neuen Muster ergänzt wird. Selbstverständlich ist auch denkbar, dass als neues Muster ein alternatives Muster, das unabhängig von einem jeweiligen fehlerhaften Muster erzeugt wird, gewählt wird. Um ein alternatives Muster zu verwenden, ist das fehlerhafte Muster zu verwerfen und bspw. unkenntlich zu machen.

Um unnötigen Ausschuss zu vermeiden und den physischen Informationsträger trotz eines fehlerhaften Musters zur Durchführung des vorgestellten Verfahrens zu verwenden, ist insbesondere vorgesehen, dass das fehlerhafte Muster in ein gültiges Muster konvertiert wird. Dazu ist vorgesehen, dass für den Fall, dass eine Zuordnung eines Musters zu einem Speicherort, bspw. während eines Verifikationsvorgangs nicht funktioniert oder ein fehlerhaftes Ergebnis erzeugt, eine neue eindeutige Kennung erzeugt wird. Dabei ist vorgesehen, dass die neue eindeutige Kennung derart gewählt wird, dass dieser unter Verwendung eines jeweiligen Zuordnungsschemas ein neues Muster zugeordnet werden kann, das das mittels des mindestens einen Sensors erfasste mindestens eine Muster als Teil des neuen Musters umfasst. Dies bedeutet, dass das fehlerhafte Muster in das neue Muster integriert wird. Dazu wird bspw. das fehlerhafte Muster durch bestimmte Zusätze zu dem neuen Muster ergänzt. Diese Zusätze sind von einem jeweiligen Nutzer auf die Oberfläche des physischen Informationsträgers aufzubringen, so dass das neue Muster auf der Oberfläche des physischen Informationsträgers aus dem fehlerhaften Muster entsteht.

Zum Erkennen eines fehlerhaften Musters kann vorgesehen sein, dass, nachdem ein Nutzer ein jeweiliges Muster auf eine Oberfläche eines jeweiligen physischen Informationsträgers aufgebracht hat, das Muster auf der Oberfläche des physischen Informationsträgers in einem Verifikationsprozess erfasst und auf seine Eignung zum Aufrufen eines entsprechenden Speicherorts überprüft wird. Sollte das Muster nicht zu einem Aufruf des entsprechenden Speicherorts führen, kann davon ausgegangen werden, dass das Muster fehlerhaft ist.

Um einem jeweiligen Nutzer diejenigen Zusätze bzw. diejenigen Merkmale zu vermitteln, die an einem jeweiligen fehlerhaften Muster zu ergänzen sind, um ein neues Muster zu erzeugen, können die Zusätze bspw. auf einer Anzeigeeinheit gegenüber dem fehlerhaften Muster hervorgehoben dargestellt werden. Dazu können die Zusätze bspw. blinkend oder farbig oder auf jede weitere technische geeignete Art grafisch oder akustisch hervorgehoben werden.

Beim Erzeugen einer neuen eindeutigen Kennung in Reaktion auf ein fehlerhaftes Muster kann vorgesehen sein, dass die neue eindeutige Kennung komplett neu erzeugt wird oder unter Verwendung einer ursprünglichen eindeutigen Kennung zu einer neuen eindeutigen Kennung ergänzt wird. Zum Ergänzen einer ursprünglichen eindeutigen Kennung kann diese bspw. um einen Zusatz verlängert werden. Dabei ist insbesondere vorgesehen, dass der Zusatz zufällig gewählt wird, um eine systematische Erzeugung neuer Muster durch einen Nutzer zu vermeiden.

In einer weiteren möglichen Ausgestaltung des vorgestellten Verfahrens ist vorgesehen, dass das mindestens eine neue Muster von dem Server erzeugt wird.

Für den Fall, dass ein jeweiliges neues Muster von dem erfindungsgemäß vorgesehenen Server, der bspw. ein Cloudserver sein bzw. aus einer Vielzahl verbundener Servereinheiten bestehen kann, erzeugt wird, ist insbesondere vorgesehen, dass ein jeweiliges fehlerhaftes Muster mittels eines Sensors einer jeweiligen tragbaren Recheneinheit, wie bspw. einem bildgebenden Sensor, insbesondere einer Kamera, erfasst und zu dem Server übertragen wird. Unter Verwendung des fehlerhaften Musters kann der Server eine neue Kennung und ggf. ein neues Muster erzeugen.

In einer weiteren möglichen Ausgestaltung des vorgestellten Verfahrens ist vorgesehen, dass das mindestens eine neue Muster von der mindestens einen tragbaren Recheneinheit erzeugt wird.

Für den Fall, dass das neue Muster von der erfindungsgemäß vorgesehenen mindestens einen tragbaren Recheneinheit erzeugt wird, ist es erforderlich, dass der Server eine jeweilige neue eindeutige Kennung, die unter Verwendung der ursprünglichen eindeutigen Kennung, die einem jeweiligen fehlerhaften Muster zugeordnet ist, an die mindestens eine tragbare Recheneinheit überträgt. Unter Verwendung der neuen eindeutigen Kennung kann die mindestens eine tragbare Recheneinheit gemäß einem jeweiligen Zuordnungsschema der neuen eindeutigen Kennung ein neues Muster zuordnen.

Es ist denkbar, dass einem Nutzer beim Erkennen eines fehlerhaften Musters ein Dialogfeld dargestellt wird, in dem der Nutzer zwischen einem neuen Muster, das das fehlerhafte Muster ergänzt, und einem alternativen, unabhängig von dem fehlerhaften Muster erzeugten Muster wählen kann.

Beim händischen Übertragen eines jeweiligen Musters auf eine Oberfläche eines physischen Informationsträgers kann es vorkommen, dass das jeweilige Muster nicht exakt auf der Oberfläche des physischen Informationsträgers wiedergegeben ist und eine Zuordnung des Musters zu einer jeweiligen eindeutigen Kennung bzw. zu einem entsprechenden Speicherort nicht möglich ist. Dies kann bspw. aufgrund einer unsauber ausgefüllten Vorlage, bei der bestimmte Bereiche unsauber ausgefüllt wurden, entstehen. Um ein fehlerhaftes Muster zu korrigieren und weiterhin zur Durchführung des vorgestellten Verfahrens zu verwenden, ist vorgesehen, dass das fehlerhafte Muster zu einem neuen Muster ergänzt wird. Alternativ kann dass fehlerhafte Muster verworfen und ein neues Muster erzeugt werden.

In einer weiteren möglichen Ausgestaltung des vorgestellten Verfahrens ist vorgesehen, dass das händisch auf die Oberfläche aufzubringende mindestens eine Muster mittels einer auf die Oberfläche des physischen Informationsträgers aufzubringenden Vorlage markiert wird.

Mittels einer Vorlage, wie bspw. einer Schablone bzw. einem Vordruck bspw. in Form einer Matrix, einem Feld oder einem Formular zum Eintragen eines Musters, kann das Muster, das bspw. auf einer Anzeigeeinheit dargestellt wird, schnell und präzise auf eine Oberfläche eines jeweiligen physischen Informationsträgers übertragen werden. Dabei kann vorgesehen sein, dass die Vorlage zum Bereitstellen des Musters auf die Oberfläche eines jeweiligen physischen Informationsträgers mittels einer Projektionseinheit projiziert wird.

In einer weiteren möglichen Ausgestaltung des vorgestellten Verfahrens ist vorgesehen, dass die Vorlage eine Anzahl zu markierender Felder umfasst und auf der mindestens einen tragbaren Recheneinheit diejenigen Felder markiert dargestellt werden, die händisch zu markieren sind, um mindestens ein der eindeutigen Kennung aktuell zugeordnetes Muster bereitzustellen.

Als Vorlage eignet sich bspw. eine Anordnung von Feldern, die von einem Nutzer zu befüllen bzw. "auszumalen" sind. Dabei kann die Schablone bereits bspw. vorgedruckt oder eingeritzt auf einer Oberfläche eines jeweiligen physischen Informationsträgers vorgesehen sein.

Es ist denkbar, dass eine Vorlage zum händischen Erzeugen eines Musters ein Identifikationsschema aufweist, das einem Nutzer eine Identifikation jeweiliger auszufüllender Bereiche der Vorlage ermöglicht. Ein derartiges Identifikationsschema kann bspw. Zahlen umfassen, die jeweiligen Bereichen der Vorlage zugeordnet sind und die beim Wiedergeben eines jeweiligen Musters dem Nutzer angegeben werden, so dass der Nutzer die zum Erzeugen des Musters auszufüllenden Bereiche einfach und schnell erkennen kann.

In einer weiteren möglichen Ausgestaltung des vorgestellten Verfahrens ist vorgesehen, dass die Vorlage von dem Server erzeugt und als Druckvorlage an einen Empfänger übermittelt wird.

Um ein jeweiliges Muster auf einer beliebigen Oberfläche bereitzustellen, kann es vorgesehen sein, dass eine für das jeweilige Muster spezifisch gestaltete Vorlage erzeugt und als Druckvorlage an einen Empfänger, wie bspw. eine Recheneinheit bzw. einen Drucker eines Nutzers übermittelt wird. Dabei kann die Vorlage bspw. das jeweilige Muster abbilden, so dass das Muster aus der Vorlage ausgeschnitten werden kann, um eine Schablone für das jeweilige Muster zu erzeugen.

Es ist ferner in einer möglichen Ausgestaltung des vorgestellten Verfahrens denkbar, dass die Vorlage das Muster direkt abbildet und auf eine Oberfläche eines jeweiligen physischen Informationsträgers aufgebracht, d. h. bspw. aufgeklebt wird.

In einer weiteren möglichen Ausgestaltung des vorgestellten Verfahrens ist vorgesehen, dass das mindestens eine Muster mittels kapazitiver Farbe auf die Oberfläche des physischen Informationsträgers aufgebracht wird.

Mittels eines durch kapazitive Farbe auf einer Oberfläche eines jeweiligen physischen Informationsträgers bereitgestellten Musters kann das Muster unter Verwendung eines kapazitiven Sensors einer zur Durchführung des vorgestellten Verfahrens konfigurierten tragbaren Recheneinheit schnell und präzise erfasst werden. Dazu kann bspw. ein Touchscreen der tragbaren Recheneinheit auf das Muster gedrückt werden, so dass der Touchscreen mit dem Muster in Kontakt gelangt und die kapazitive Farbe mit dem Touchscreen wechselwirkt, um die tragbare Recheneinheit zu steuern. Dabei kann vorgesehen sein, dass durch ein jeweiliges Muster Steuerbefehle an die tragbare Recheneinheit übermittelt werden, die bspw. bewirken, dass automatisch ein auf einem dem jeweiligen Muster zugeordneten Speicherort hinterlegter Inhalt auf der tragbaren Recheneinheit dargestellt wird.

Es ist denkbar, dass automatisch erfasste Daten eines jeweiligen physischen Informationsträgers, wie bspw. über ein Scan-Center ausgelesene Daten, automatisch zu einem dem physischen Informationsträger zugeordneten Speicherort übertragen werden. Dazu kann eine Kennung, die das Scan-Center dem physischen Informationsträger zuordnet, einer auf dem Server hinterlegten und dem physischen Informationsträger zugewiesenen eindeutigen Kennung zugeordnet werden, indem bspw. die von dem Scan-Center verwendete Kennung an den Server übermittelt wird. Entsprechend kann das Scan-Center durch Übermittlung der von dem Scan-Center verwendeten Kennung auf den Speicherort auf dem Server zugreifen und dort digitale Inhalte hinterlegen.

Alternativ ist es denkbar, dass der Server auf das Scan-Center zugreift, um Daten, die durch das Scan-Center von einem jeweiligen physischen Informationsträger erfasst werden, automatisch zu einem jeweiligen Speicherort zu übertragen, der dem physischen Informationsträger bzw. einer eindeutigen Kennung eines auf dem physischen Informationsträger vorgesehenen Musters zugeordnet ist. Um eine Zuordnung von durch das Scan-Center erfassten Daten zu einem jeweiligen Speicherort zu ermöglichen, kann ein Dienst verwendet werden, der bspw. auf einem Client-Server ausgeführt wird, und der eine Zuordnungstabelle umfasst, in der von dem Scan-Center verwendete Kennungen jeweiligen von dem Server verwendeten Kennungen zugeordnet werden.

Weiterhin kann vorgesehen sein, dass der erfindungsgemäß vorgesehene Server mittels einer Exportfunktion dazu konfiguriert wird, an einem Speicherort ausgewählte Inhalte automatisch an ausgewählte Adressen zu übermitteln. Dazu kann der Server bspw. eine e-mail versenden oder eine Kommunikationsverbindung zu einem weiteren Server oder einer Recheneinheit aufbauen.

Es ist insbesondere vorgesehen, dass eine Kommunikationsverbindung zum Austausch von Informationen zwischen dem erfindungsgemäß vorgesehenen Server und der erfindungsgemäß vorgesehenen mindestens einen tragbaren Recheneinheit über eine sichere Verbindung, wie bspw. eine SSL-Verbindung läuft.

In einer weiteren möglichen Ausgestaltung des vorgestellten Verfahrens ist vorgesehen, dass als das mindestens eine Muster eine alphanumerische Zeichenkette gewählt wird.

Das erfindungsgemäß vorgesehene Muster kann eine alphanumerische Zeichenkette, wie bspw. eine Buchstabenfolge, eine Zahlenfolge oder eine Folge beliebiger Schriftzeichen sein. Im Falle einer Korrektur einer alphanumerischen Zeichenkette ist insbesondere vorgesehen, dass eine bereitgestellte fehlerhafte Zeichenkette durch ein weiteres Zeichen zu einer gültigen Zeichenkette ergänzt wird.

In einer weiteren möglichen Ausgestaltung des vorgestellten Verfahrens ist vorgesehen, dass als das mindestens eine Muster ein grafisches Muster gewählt wird.

Ein grafisches Muster, wie bspw. eine Raute, ein Quadrat, ein Rechteck, ein Kreis oder jede weitere geometrische Form, kann besonders gut mittels eines optischen Sensors erfasst werden und eignet sich entsprechend gut zum Erzeugen des erfindungsgemäß vorgesehen Musters. Dabei kann vorgesehen sein, dass verschiedene geometrische Formen zu einem Muster kombiniert werden.

In einer weiteren möglichen Ausgestaltung des vorgestellten Verfahrens ist vorgesehen, dass mittels der auf der mindestens einen tragbaren Recheneinheit ausgeführten Applikation ein Betrag auf dem mindestens einen Speicherort hinterlegt wird. Dabei ist vorgesehen, dass als der physische Informationsträger eine mittels des mindestens einen Musters zu kennzeichnende Wertmarke gewählt wird.

Um einem physischen Informationsträger, wie bspw. einem Brief, einer Briefmarke, einer Eintrittskarte, einem Coupon, einer Müllmarke, einer Rabattmarke, einem Ticket, einem Fahrschein oder jeder weiteren Wertmarke mittels des vorgestellten Verfahrens einen Wert zuzuordnen, d. h. eine jeweilige Wertmarke aufzuladen, ist vorgesehen, dass ein Nutzer mittels der mindestens einen erfindungsgemäß vorgesehenen tragbaren Recheneinheit einen Betrag vorgibt und diesen an den erfindungsgemäß vorgesehenen Server übermittelt, woraufhin der Server den Betrag auf einem von dem Server ausgewählten Speicherort auf dem Server hinterlegt. Um den ausgewählten Speicherort der Wertmarke zuzuordnen, erzeugt der Server eine eindeutige Kennung. Auf Grundlage der eindeutigen Kennung wird bspw. durch den Server oder die mindestens eine tragbare Recheneinheit ein Muster erzeugt. Das Muster wird dem Nutzer präsentiert und von dem Nutzer händisch auf die Wertmarke übertragen, so dass unter Erfassung des Musters auf der Wertmarke der in dem Speicherort auf dem Server hinterlegte Betrag eingesehen und ggf. editiert werden kann. Dabei ist es denkbar, dass dem Server eine Liste vorgegeben wird, welche Nutzer den Speicherort einsehen und welche Nutzer den Speicherort editieren können, so dass bspw. ein Verkäufer den Betrag auf dem Speicherort einsehen, jedoch nicht editieren kann, wohingegen ein Nutzer, bspw. unter Verwendung eines vorab erworbenen Freischaltcodes, den Betrag auf dem Speicherort in einen anderen bspw. höheren Betrag ändern kann. Entsprechend können einer Wertmarke, die einmal mit einem Muster markiert wurde, zu verschiedenen Zeiten verschiedene Beträge zugeordnet werden, so dass bspw. ein Gutschein teilweise eingelöst werden kann, indem ein jeweiliger dem Gutschein zugeordneter Betrag auf einem entsprechenden Speicherort dynamisch angepasst wird.

Es ist denkbar, dass eine auf einem jeweiligen physischen Informationsträger vorgesehene Vorlage ein Sicherheitsmerkmal umfasst, das zur Authentifizierung verwendet wird, um eine beliebige Kopie einer jeweiligen Vorlage zu verhindern. Das Sicherheitsmerkmal kann bspw. ein Sicherheitscode, insbesondere ein hochverschlüsselter Datenmatrix-Code sein. Das Sicherheitsmerkmal kann ebenso ein Muster mit spezifischen physischen, graphischen und optischen Eigenschaften oder Farben sein, wie bspw. ein digitales Rauschmuster, in sich eingedrehte Rasterpunkte, Kippfarben, unsichtbare Farben, Hologramme, Taggants oder Wasserzeichen. Das Sicherheitsmuster kann zusammen mit einem in die Vorlage übertragenen Muster mittels des erfindungsgemäß vorgesehenen Sensors erfasst und an den erfindungsgemäß vorgesehenen Server zur Durchführung eines Authentifizierungsverfahrens übermittelt werden. Das Sicherheitsmuster kann bspw. ein Bar-Code sein.

Ferner betrifft die vorgestellte Erfindung ein Datenverwaltungssystem, mit mindestens einem Server und mindestens einer tragbaren Recheneinheit, wobei die mindestens eine tragbare Recheneinheit mittels einer auf der mindestens einen tragbaren Recheneinheit ausgeführten Applikation dazu konfiguriert ist, auf dem mit der mindestens einen tragbaren Recheneinheit über eine Kommunikationsschnittstelle in kommunikativer Verbindung stehenden Server mindestens einen Speicherort anzufordern, und wobei der Server dazu konfiguriert ist, in Reaktion auf die Anforderung des mindestens einen Speicherortes durch die mindestens eine tragbare Recheneinheit mindestens einen Speicherort auf dem Server auszuwählen und dem mindestens einen Speicherort eine eindeutige Kennung zuzuordnen, und die eindeutige Kennung an die mindestens eine tragbare Recheneinheit zu übertragen, und wobei der Server und/oder die mindestens eine tragbare Recheneinheit dazu konfiguriert sind, der eindeutigen Kennung mindestens ein Muster zuzuordnen, das händisch auf eine Oberfläche eines physischen Informationsträgers aufzubringen ist. Dabei ist vorgesehen, dass die mindestens eine tragbare Recheneinheit dazu konfiguriert ist, einem Nutzer das mindestens eine Muster darzustellen und den Nutzer zum händisches Aufbringen des mindestens einen Musters, durch Zeichnen bzw. Schreiben des Musters mittels eines Schreibgeräts, auf die Oberfläche des physischen Informationsträgers anzuleiten, so dass durch das mindestens eine auf die Oberfläche des physischen Informationsträgers aufzubringende Muster der mindestens eine Speicherort auf dem Server mit dem physischen Informationsträger verbunden wird. Weiterhin ist vorgesehen, dass die mindestens eine tragbare Recheneinheit dazu konfiguriert ist, wenn das Muster unter Verwendung mindestens eines Sensors der tragbaren Recheneinheit erfasst und erkannt wird, die Zuordnung des mindestens einen Speicherorts zu der eindeutigen Kennung von dem Server herunterzuladen und einen Zugriff der mindestens einen tragbaren Recheneinheit auf den mindestens einen Speicherort unter Verwendung der eindeutigen Kennung zu ermöglichen.

Erfindungsgemäß ist der Server dazu konfiguriert, das Muster mittels eines vorgegebenen Zuordnungsschemas und unter Verwendung der eindeutigen Kennung zu erzeugen und an die den Speicherort anfordende tragbare Recheneinheit zu übertragen oder die eindeutige Kennung zu der mindestens einen den Speicherort anfordernden tragbaren Recheneinheit zu übertragen, wobei die tragbare Recheneinheit dazu konfiguriert ist, unter Verwendung der eindeutigen Kennung und des vorgegebenen Zuordnungsschemas das Muster zu erzeugen.

Das vorgestellte Datenverwaltungssystem dient insbesondere zur Durchführung des vorgestellten Verfahrens.

In einer möglichen Ausgestaltung des vorgestellten Datenverwaltungssystems ist vorgesehen, dass der physische Informationsträger eine Wertmarke ist und auf dem mindestens einen Speicherort ein Betrag der Wertmarke hinterlegt ist. Dabei ist vorgesehen, dass der Server dazu konfiguriert ist, lediglich Nutzern aus einer vorgegebenen Liste an Nutzern einen Zugriff auf den auf dem Speicherort hinterlegten Betrag zu ermöglichen.

Durch Verwendung von Wertmarken und eine Begrenzung von zum Zugriff auf einen einer Wertmarke zugeordneten Speicherort kann ein sicheres Bezahlsystem bereitgestellt werden. Dabei kann selbstverständlich vorgesehen sein, dass auf einem einer jeweiligen Wertmarke bzw. einem jeweiligen physischen Informationsträger zugeordneten Speicherort Zahlungsinformationen eines Nutzers, wie bspw. Kreditkarten- oder Kontoinformationen hinterlegt sind, so dass eine Wertmarke selbst als Kreditkarte verwendet werden kann.

Weitere Vorteile und Ausgestaltungen ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.
Figur 1 zeigt eine schematische Darstellung einer möglichen Ausgestaltung des vorgestellten Verfahrens.
Figur 2 zeigt eine schematische Darstellung eines zur Durchführung einer möglichen Ausgestaltung des vorgestellten Verfahrens vorgesehene Vorlage.
Figur 3 zeigt ein in die Vorlage aus Figur 2 übertragenes Muster, wie es zur Durchführung einer möglichen Ausgestaltung des vorgestellten Verfahrens vorgesehen ist.
Figur 4 zeigt ein auf Grundlage des Musters aus Figur 3 zu einem neuen Muster ergänztes Muster, wie es zur Durchführung einer möglichen Ausgestaltung des vorgestellten Verfahrens vorgesehen ist.
Figur 5 zeigt eine zur Durchführung einer möglichen Ausgestaltung des vorgestellten Verfahrens vorgesehene Wertmarke.
Figur 6 zeigt die Wertmarke aus Figur 5 mit einem gemäß einer möglichen Ausgestaltung des vorgestellten Verfahrens ermittelten Muster.

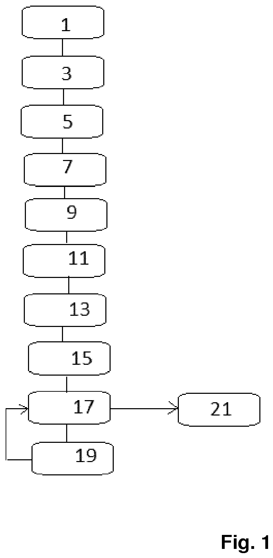

In Figur 1 ist ein Flussdiagramm dargestellt, das den Ablauf des vorgestellten Verfahrens verdeutlicht. Um Daten auf einem Server einem physischen Informationsträger in Form eines Ordners einer Akte zuzuordnen, wird in einem Konfigurationsschritt 1 eine aus bspw. dem Internet oder jeder weiteren technisch geeigneten Umgebung heruntergeladene Applikation auf einer tragbaren Recheneinheit ausgeführt bzw. installiert. Die Applikation konfiguriert dadurch die tragbare Recheneinheit zur Durchführung des vorgestellten Verfahrens.

Sobald die tragbare Recheneinheit mittels der Applikation konfiguriert wurde, kann ein Nutzer das vorgestellte Verfahren starten und sich in einem Registrierungsschritt 3, bspw. unter Angabe bspw. einer Nutzerkennung, einer Kundennummer und einem Passwort, auf der tragbaren Recheneinheit registrieren. Es ist denkbar, dass das Passwort von einem mit der tragbaren Recheneinheit in Verbindung stehenden Server bereitgestellt wird und ggf. in einem optionalen Authentifizierungsschritt 5 durch zusätzliche Merkmale, wie bspw. einen Fingerabdruck, ein Sprachmuster, ein Gesichtsmerkmal oder ein Irismuster ergänzt wird.

In einem Anforderungsschritt 7 fordert die tragbare Recheneinheit von dem Server einen Speicherort an. In Reaktion auf die Anforderung der tragbaren Recheneinheit wählt der Server einen Speicherort aus und übermittelt der tragbaren Recheneinheit ein entsprechendes Signal, um anzuzeigen, dass der Speicherort bereitgestellt wurde. Dabei kann der Nutzer beim Anfordern des Speicherortes bspw. angeben, wie groß der Speicherort mindestens sein soll und welche Bezeichnung der Speicherort tragen soll. Die Bezeichnung kann auch von dem Server vorgeschlagen werden oder bspw. gemäß einer Logik eines physischen Aufbewahrungssystems zum Verwalten des physischen Informationsträgers gewählt werden.

In einem Kennungsschritt 9 wird dem auf dem Server bereitgestellten Speicherort eine eindeutige Kennung zugeordnet und auf dem Server hinterlegt.

In einem Musterschritt 11 wird der in dem Kennungsschritt 9 erzeugten eindeutigen Kennung ein Muster zugeordnet, das händisch auf einer Oberfläche des physischen Informationsträgers aufzubringen ist. Dies bedeutet, dass das Muster durch Bereiche gekennzeichnet ist, die bspw. mittels eines Schreibgeräts von einem Nutzer auf der Oberfläche des physischen Informationsträgers nachgebildet werden können, um das Muster auf die Oberfläche des physischen Informationsträgers zu übertragen, indem jeweilige Bereiche des Musters bspw. in einer auf der Oberfläche des physischen Informationsträgers vorgesehenen Vorlage ausgefüllt, angekreuzt oder auf jede weitere Art markiert werden.

In einem Übermittlungsschritt 13 wird das in dem Musterschritt 11 der eindeutigen Kennung zugeordnete Muster an die tragbare Recheneinheit übermittelt.

Alternativ kann die in dem Kennungsschritt 9 dem Speicherort zugeordnete eindeutige Kennung an die tragbare Recheneinheit übertragen und das Muster der eindeutigen Kennung durch die tragbare Recheneinheit zugeordnet werden.

In einem Übertragungsschritt 15 wird das Muster einem Nutzer präsentiert und von dem Nutzer auf die Oberfläche des physischen Informationsträgers übertragen, indem bspw. das Muster mittels eines Schreibgeräts in einer Vorlage auf der Oberfläche des physischen Informationsträgers bereitgestellt wird. Dazu kann die Vorlage bspw. eine Anzahl Felder umfassen, die mittels des Schreibgeräts, je nach Muster, auszufüllen sind. Nachdem das Muster auf die Oberfläche des physischen Informationsträgers übertragen wurde, ist der physische Informationsträger durch das Muster dem Speicherort auf dem Server zugeordnet und umgekehrt.

Um das auf die Oberfläche des physischen Informationsträgers aufgebrachte Muster zu überprüfen, kann in einem optionalen Validierungsschritt 17 das Muster auf der Oberfläche des physischen Informationsträgers mittels eines Sensors der tragbaren Recheneinheit erfasst und zum Zugriff auf den Speicherort verwendet werden. Sollte der Zugriff auf den Speicherort scheitern, wird das Muster auf der Oberfläche des physischen Informationsträgers als fehlerhaft erkannt und eine Fehlermeldung ausgegeben. In einem solchen Fall wird das Verfahren mit einem Korrekturschritt 19 fortgeführt. Sollte der Zugriff auf den Speicherort fehlerfrei ablaufen, kann der Speicherort in einem Editierungsschritt 21 editiert, d. h. bspw. mit digitalen Inhalten befüllt werden.

In dem Korrekturschritt 19 wird das fehlerhaft auf die Oberfläche des physischen Informationsträgers aufgebrachte Muster korrigiert. Dazu wird eine neue eindeutige Kennung von dem Server angefordert. Dabei wird die neue eindeutige Kennung derart gewählt, dass diese einem neuen Muster entspricht, das das fehlerhafte Muster umfasst, so dass das fehlerhafte Muster zu dem neuen Muster ergänzt werden kann. Dazu wird das fehlerhafte Muster, das bereits in dem Validierungsschritt erfasst wurde, zu dem Server übertragen. Der Server wertet das fehlerhafte Muster aus und generiert eine Kennung, die dem neuen Muster entspricht. Danach generiert der Server das neue Muster und überträgt das neue Muster zu der tragbaren Recheneinheit. Auf der tragbaren Recheneinheit werden anschließend diejenigen Bereiche hervorgehoben dargestellt, die an dem fehlerhaften Muster zu ergänzen sind, um das neue Muster zu erzeugen. Der Nutzer ergänzt diese Bereiche auf der Oberfläche des physischen Informationsträgers, um das neue Muster auf der Oberfläche des physischen Informationsträgers bereitzustellen. Anschließend wird das neue Muster in einem erneuten Validierungsschritt 17 überprüft.

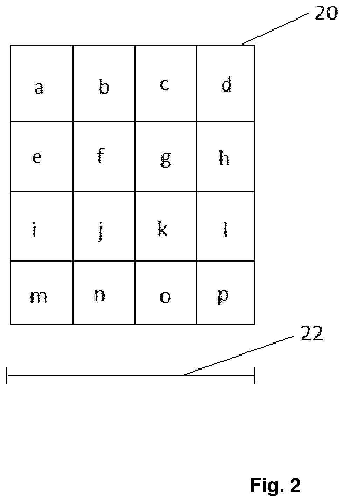

In Figur 2 ist eine Vorlage 20 dargestellt. Die Vorlage 20 umfasst sechzehn Bereiche a bis p. Die Vorlage 20 kann bspw. auf einem Ordnerrücken eines Ordners aufgebracht sein. Die Vorlage 20 kann bspw. eine Kantenlänge von 3 cm aufweisen, wie durch den Maßstab 22, der eine Länge von 3 cm angibt, angedeutet.

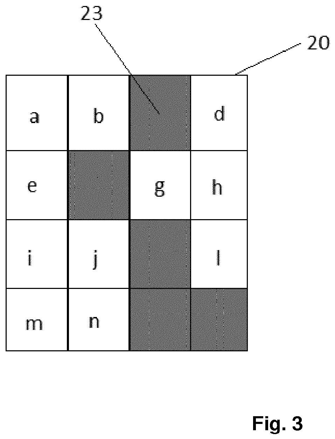

Um den Ordner einem digitalen Speicherort auf einem Server zuzuordnen, können jeweilige Bereiche der Bereiche a bis p bspw. unter Verwendung eines Schreibgeräts oder eines Stempels derart ausgefüllt werden, dass ein Muster innerhalb der Vorlage entsteht, wie es bspw. in Figur 3 dargestellt ist.

In Figur 3 ist ein Muster 23 dargestellt, das in die Vorlage 20 gemäß Figur 2 eingezeichnet wurde. Dazu wurden die Bereiche c, f, k, o und p ausgefüllt. Das Muster 23 kann mittels eines Sensors, wie bspw. einem bildgebenden Sensor, insbesondere einer Kamera erfasst und zum Zugriff auf den Speicherort auf dem Server verwendet werden.

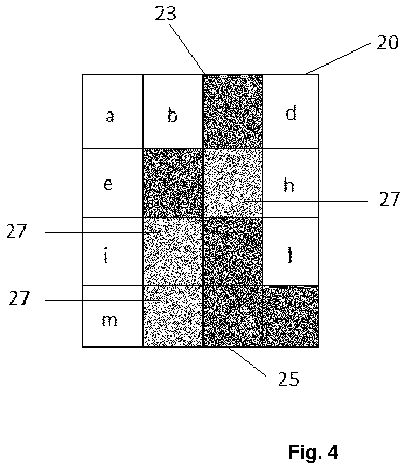

In Figur 4 ist ein neues Muster 25 dargestellt, das unter Verwendung des Musters 23 erstellt wurde. Dazu wurden die Bereiche j, n und g ausgefüllt, wie durch die darstellungsbedingt hell schraffierten Bereiche 27 angedeutet. Selbstverständlich können die zusätzlichen ausgefüllten Bereiche j, n und g auch in derselben Farbe ausgefüllt werden, wie die Bereiche c, f, k, o und p des Musters 23.

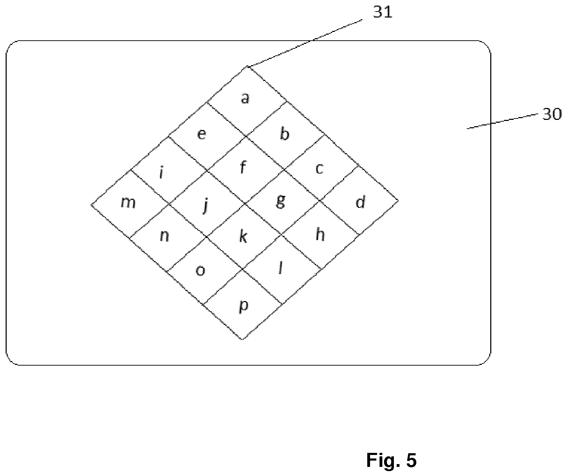

In Figur 5 ist eine Wertmarke 30 in Form eines Briefs dargestellt. Um die Wertmarke 30 mit einem Betrag zu befüllen, wird eine Vorlage 31 auf der Wertmarke 30 mit einem Muster ausgefüllt. Dazu wird mittels einer möglichen Ausgestaltung der auf einer tragbaren Recheneinheit ausgeführten erfindungsgemäß vorgesehenen Applikation zunächst ein Betrag aus einer Vielzahl dargestellter Beträge von einem Nutzer der tragbaren Recheneinheit ausgewählt oder manuell eingegeben. Bspw. kann der Nutzer 70 Cent für ein Briefporto auswählen.

Sobald der Betrag von dem Nutzer vorgegeben ist, wird der Betrag von der tragbaren Recheneinheit an den erfindungsgemäß vorgesehenen Server übermittelt und, dadurch bedingt, ein Speicherort auf dem Server angefordert. Der Server wählt daraufhin einen Speicherort aus und speichert dort Informationen über den Betrag und den Nutzer. Dazu kann der Server Informationen über den Nutzer, wie bspw. Zahlungsinformationen, Identifikationsdaten von der Applikation abfragen oder über die Applikation von dem Nutzer bspw. unter Verwendung eines auf der tragbaren Recheneinheit darzustellenden Dialogfeldes abfragen.

Sobald der Speicherort von dem Server ausgewählt ist, wird dem Speicherort eine eindeutige Kennung zugewiesen. Diese Kennung wird anschließend zum Erzeugen des in die Vorlage 31 einzutragenden Musters verwendet. Dazu kann der Server gemäß einer vorgegebenen Zuordnungsregel oder gemäß einem Zufallsalgorithmus aus der eindeutigen Kennung das Muster generieren und an die tragbare Recheneinheit übermitteln. Alternativ kann der Server die eindeutige Kennung zu der tragbaren Recheneinheit übertragen, die dann ihrerseits bspw. mittels einer vorgegebenen Zuordnungsregel oder gemäß einem Zufallsalgorithmus das Muster generiert und dem Server übermittelt. Sobald das Muster auf der tragbaren Recheneinheit verfügbar ist, kann dem Nutzer das Muster angezeigt werden, so dass der Nutzer das Muster händisch in die Vorlage 31 übertragen kann. Dazu wird dem Nutzer bspw. durch Anzeigen einer Zeichenfolge vorgegeben, welche Bereiche a bis p in der Vorlage 31 händisch auszufüllen sind. Vorliegend wird dem Nutzer bspw. die Anweisung gegeben, nacheinander die Bereiche p, k, n, i, e, a, b, f, j, o, I und g zu verbinden.

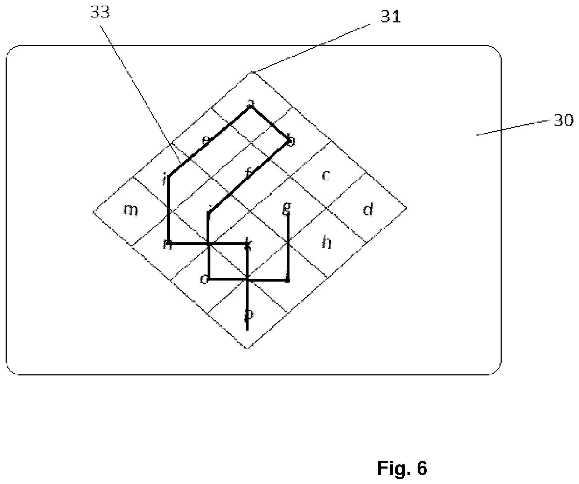

In Figur 6 ist die Wertmarke 30 mit einer befüllten Vorlage 31 dargestellt. Durch das Eintragen des voranstehend beschriebenen Musters in Form einer Linie 33, die in die Vorlage 31 eingetragen wird, wird die Wertmarke 30 dem auf dem Speicherort ausgewählten Speicherort und entsprechend dem in dem Speicherort hinterlegten Betrag sowie ggf. weiteren Informationen, wie bspw. Informationen über den Nutzer zugeordnet. Vorliegend wurde der Wertmarke der Betrag 70 Cent zugeordnet.

Um die in dem Speicherort auf dem Server hinterlegten Informationen einzusehen oder zu editieren, kann das Muster mittels eines Sensors, wie bspw. eines bildgebenden Sensors, insbesondere einer Kamera der tragbaren Recheneinheit unter Verwendung der Applikation erfasst werden. Die Applikation schließt von dem Muster auf eine entsprechende eindeutige Kennung und übermittelt diese an den Server oder übermittelt das Muster an den Server, so dass der Server von dem Muster auf eine dem Muster entsprechende eindeutige Kennung schließen kann. Dazu kann die Applikation eine Zuordnungsregel, mittels derer von einem jeweiligen Muster auf eine jeweilige Kennung zu schließen ist, umfassen. Alternativ kann die Applikation das erfasste Muster bzw. bspw. ein Bild des Musters an den Server übermitteln, so dass der Server das erfasste Muster mit jeweiligen von dem Server erzeugten Mustern abgleichen kann. Mittels der eindeutigen Kennung kann der Server den der eindeutigen Kennung zugeordneten Speicherort bestimmen und die auf dem Speicherort hinterlegten Inhalte ausgeben, d. h. bspw. an die tragbare Recheneinheit oder einen weiteren vorgegebenen Empfänger bspw. mittels einer e-mail übermitteln.

Entsprechend kann unter Verwendung des Musters auf den dem Muster zugeordneten Speicherort bzw. den Speicherort, der der eindeutigen Kennung zugeordnet ist, die wiederum dem Speicherort zugeordnet ist, zugegriffen werden. Dies bedeutet, dass bspw. der Betrag, der der Wertmarke 30 zugeordnet ist nachträglich, d. h. nach einer ersten Zuordnung eines Betrags, geändert werden kann. Selbstverständlich kann auch ein der Wertmarke 30 zugeordneter Nutzer geändert werden. Weiterhin können zusätzliche Informationen auf dem Speicherort, der mittels des Musters bestimmt werden kann, wie bspw. ein Empfänger des Briefs oder Zahlungsinformationen des Nutzers hinterlegt bzw. abgeändert werden. Dabei kann selbstverständlich vorgesehen sein, dass zumindest ein Teil der auf dem Speicherort, der mittels des Musters bestimmt werden kann, hinterlegten Informationen nur unter Verwendung einer Authentifizierungsmaßnahme eingesehen und/oder editiert werden kann. Vorliegend kann bspw. ein gegenüber dem Server authentifiziertes Postunternehmen das Muster von dem Brief einscannen und auf den auf dem Speicherort hinterlegten Betrag zugreifen, um zu prüfen, ob das Porto bezahlt wurde.

## Patentansprüche

1. Verfahren zur Zuordnung eines digitalen Speicherorts zu einem physischen Informationsträger,
wobei
unter Verwendung einer auf einer tragbaren Recheneinheit ausgeführten Applikation ein Speicherort auf einem über eine Kommunikationsschnittstelle mit der tragbaren Recheneinheit in Verbindung stehenden Server von der tragbaren Recheneinheit angefordert und in Reaktion auf die Anforderung durch den Server bereitgestellt wird;
von dem Server dem Speicherort eine eindeutige Kennung zugeordnet wird;
durch den Server und/oder die tragbare Recheneinheit der eindeutigen Kennung ein Muster (23) zugeordnet wird;
das Muster (23) einem Nutzer durch eine Anzeigeeinheit der tragbaren Recheneinheit dargestellt wird, und der Nutzer durch die tragbare Recheneinheit zum händischen Aufbringen des Musters (23), durch Zeichnen bzw. Schreiben des Musters mittels eines Schreibgeräts, auf die Oberfläche eines physischen Informationsträgers angeleitet wird, um den Speicherort auf dem Server mit dem physischen Informationsträger zu verbinden;
und, wenn das Muster (23) unter Verwendung eines Sensors der tragbaren Recheneinheit oder mindestens einer weiteren Recheneinheit vom physischen Informationsträger erfasst und erkannt wird, die eindeutige Kennung von dem Server heruntergeladen wird, und mittels der tragbaren Recheneinheit oder der mindestens einen weiteren Recheneinheit unter Verwendung der eindeutigen Kennung auf den Speicherort zugegriffen wird,
wobei das Muster (23) von dem Server mittels eines vorgegebenen Zuordnungsschemas unter Verwendung der eindeutigen Kennung erzeugt und an die den Speicherort anfordernde tragbare Recheneinheit übertragen wird oder die eindeutige Kennung von dem Server zu der mindestens einen den Speicherort anfordernden tragbaren Recheneinheit übertragen und von der tragbaren Recheneinheit unter Verwendung der eindeutigen Kennung und des vorgegebenen Zuordnungsschemas das Muster (23) erzeugt wird.

2. Verfahren nach Anspruch 1,
wobei, nachdem das Muster (23) auf die Oberfläche des physischen Informationsträgers aufgebracht wurde, ein auf die Oberfläche des physischen Informationsträgers aufgebrachtes Muster mittels des Sensors der tragbaren Recheneinheit erfasst und mit dem der eindeutigen Kennung zugeordneten Muster (23) zur Verifikation abgeglichen wird,
und wobei für den Fall, dass das mittels des Sensors erfasste Muster von dem der eindeutigen Kennung zugeordneten Muster (23) derart abweicht, dass eine Zuordnung des mittels des Sensors erfassten Musters zu der eindeutigen Kennung fehlerhaft verläuft, durch die tragbare Recheneinheit von dem Server eine neue eindeutige Kennung angefordert wird,
und wobei der Server die neue eindeutige Kennung wählt, wobei die neue eindeutige Kennung dazu ausgestaltet ist, einem neuen Muster (25) zugeordnet zu werden, das das mittels des Sensors erfasste Muster (23) als Teil des neuen Musters (25) umfasst,
und wobei unter Verwendung des mittels des Sensors erfassten Musters der neuen eindeutigen Kennung das neue Muster (25) zugeordnet wird,
und wobei das auf die Oberfläche des physischen Informationsträgers aufgebrachte Muster (23) durch den Nutzer entsprechend dem neuen Muster (25) ergänzt wird.

3. Verfahren nach Anspruch 2,
wobei das neue Muster (25) von dem Server oder der tragbaren Recheneinheit erzeugt wird.

4. Verfahren nach einem der voranstehenden Ansprüche,
wobei das händisch auf die Oberfläche aufzubringende Muster (23) unter Verwendung mindestens einer auf die Oberfläche des physischen Informationsträgers aufzubringenden Vorlage (20, 31) erzeugt wird.

5. Verfahren nach Anspruch 4,
wobei die mindestens eine Vorlage (20, 31) von dem Server erzeugt und als Druckvorlage an einen Empfänger übermittelt wird.

6. Verfahren nach Anspruch 4 oder 5,
wobei die mindestens eine Vorlage (20, 31) eine Anzahl zu markierender Bereiche (27) umfasst und auf der tragbaren Recheneinheit diejenigen Bereiche (27) markiert dargestellt werden, die händisch zu markieren sind, um ein der eindeutigen Kennung aktuell zugeordnetes Muster bereitzustellen.

7. Verfahren nach einem der voranstehenden Ansprüche,
wobei ein Zugriff der tragbaren Recheneinheit auf den Server lediglich dann ermöglicht wird, wenn eine mittels eines Ortungssystems ermittelte Position der tragbaren Recheneinheit mit einer Position aus einer vorgegebenen Liste an Positionen übereinstimmt.

8. Verfahren nach einem der voranstehenden Ansprüche,
wobei lediglich Nutzern aus einer vorgegebenen Liste an Nutzern ein Zugriff auf den Speicherort unter Verwendung des Musters (23) gestattet wird.

9. Verfahren nach einem der voranstehenden Ansprüche,
wobei der Speicherort durch die tragbare Recheneinheit von dem Server in Reaktion auf einen Erfassungsvorgang eines Markers durch die tragbare Recheneinheit angefordert wird.

10. Verfahren nach einem der voranstehenden Ansprüche,
wobei als das Muster (23) eine alphanumerische Zeichenkette gewählt wird.

11. Verfahren nach einem der voranstehenden Ansprüche,
wobei als das Muster (23) ein grafisches Muster gewählt wird.

12. Verfahren nach einem der voranstehenden Ansprüche,
wobei mittels der auf der tragbaren Recheneinheit ausgeführten Applikation ein Betrag auf dem Speicherort hinterlegt wird, und
wobei als der physische Informationsträger eine mittels des Musters (23) zu kennzeichnende Wertmarke (30) gewählt wird.

13. Datenverwaltungssystem, mit einem Server und einer tragbaren Recheneinheit,
wobei die tragbare Recheneinheit mittels einer auf der tragbaren Recheneinheit ausgeführten Applikation dazu konfiguriert ist, auf dem mit der tragbaren Recheneinheit über eine Kommunikationsschnittstelle in kommunikativer Verbindung stehenden Server mindestens einen Speicherort anzufordern, wobei der Server dazu konfiguriert ist, in Reaktion auf die Anforderung des mindestens einen Speicherortes durch die tragbare Recheneinheit einen Speicherort auf dem Server auszuwählen und dem Speicherort eine eindeutige Kennung zuzuordnen, und die eindeutige Kennung der tragbaren Recheneinheit und optional mindestens einer weiteren Recheneinheit verfügbar zu machen,
wobei der Server und/oder tragbare Recheneinheit dazu konfiguriert sind, der eindeutigen Kennung ein Muster (23) zuzuordnen, das händisch auf eine Oberfläche eines physischen Informationsträgers aufzubringen ist,
wobei die tragbare Recheneinheit dazu konfiguriert ist, einem Nutzer das Muster (23) durch eine Anzeigeeinheit darzustellen und den Nutzer zum händischen Aufbringen des Musters (23), durch Zeichnen bzw. Schreiben des Musters mittels eines Schreibgeräts, auf die Oberfläche des physischen Informationsträgers anzuleiten, so dass durch das auf die Oberfläche des physischen Informationsträgers aufzubringende Muster (23) der Speicherort auf dem Server mit dem physischen Informationsträger verbunden wird,
wobei die tragbare Recheneinheit oder optional mindestens eine weitere Recheneinheit dazu konfiguriert ist, wenn das Muster (23) unter Verwendung eines Sensors der tragbaren Recheneinheit oder optional der mindestens einen weiteren Recheneinheit vom physischen Informationsträger erfasst und erkannt wird, die Zuordnung des Speicherorts zu der eindeutigen Kennung von dem Server herunterzuladen und einen Zugriff der einen oder optional der mindestens einen weiteren Recheneinheit auf den Speicherort unter Verwendung der eindeutigen Kennung zu ermöglichen, und
wobei der Server dazu konfiguriert ist das Muster (23) mittels eines vorgegebenen Zuordnungsschemas und unter Verwendung der eindeutigen Kennung zu erzeugen und an die den Speicherort anfordernde tragbare Recheneinheit zu übertragen, oder die eindeutige Kennung zu der mindestens einen den Speicherort anfordernden tragbaren Recheneinheit zu übertragen und die tragbare Recheneinheit dazu konfiguriert ist, unter Verwendung der eindeutigen Kennung und des vorgegebenen Zuordnungsschemas das Muster (23) zu erzeugen.

14. Datenverwaltungssystem nach Anspruch 13, wobei der physische Informationsträger eine Wertmarke (30) ist und auf dem Speicherort ein Betrag der Wertmarke (30) hinterlegt ist, und wobei der Server dazu konfiguriert ist, lediglich Nutzern aus einer vorgegebenen Liste an Nutzern einen Zugriff auf den auf dem Speicherort hinterlegten Betrag zu ermöglichen.

## Claims

1. A method for allocating a digital memory location to a physical information carrier, wherein,
using an application executed on a portable processing unit, the portable processing unit requests a memory location on a server in communication with the portable processing unit via a communication interface and the server provides said location in response to the request;
the server allocates a unique identifier to the memory location;
the server and/or the portable processing unit allocates a pattern (23) to the unique identifier;
a display unit of the portable processing unit displays the pattern (23) to a user, and the portable processing unit guides the user to manually apply the pattern (23), by drawing or writing the pattern using a writing device, to the surface of a physical information carrier so as to link the memory location on the server to the physical information carrier;
and, when the pattern (23) is detected and recognized on the physical information carrier using a sensor of the portable processing unit or of at least one further processing unit, the unique identifier is downloaded from the server, and the memory location is accessed by means of the portable processing unit or the at least one further processing unit using the unique identifier,
wherein the server generates the pattern (23) by means of a predetermined allocation scheme using the unique identifier and transmits it to the portable processing unit requesting the memory location, or the server transmits the unique identifier to the at least one portable processing unit requesting the memory location and the portable processing unit generates the pattern (23) by using the unique identifier and the predetermined allocation scheme.

2. The method according to claim 1,
wherein, after the pattern (23) was applied to the surface of the physical information carrier, a pattern applied to the surface of the physical information carrier is detected by means of the sensor of the portable processing unit and matched with the pattern (23) allocated to the unique identifier for verification,
and wherein, in the event that the pattern detected by means of the sensor deviates from the pattern (23) allocated to the unique identifier in such a way that an allocation of the pattern detected by means of the sensor to the unique identifier fails, the portable processing unit requests a new unique identifier from the server,
and wherein the server selects the new unique identifier, wherein the new unique identifier is designed to be allocated to a new pattern (25) comprising the pattern (23) detected by the sensor as part of the new pattern (25),
and wherein, using the pattern detected by means of the sensor, the new pattern (25) is allocated to the new unique identifier,
and wherein the user completes the pattern (23) applied to the surface of the physical information carrier according to the new pattern (25).

3. The method according to claim 2,
wherein the new pattern (25) is generated by the server or the portable processing unit.

4. The method according to one of the preceding claims,
wherein the pattern (23) to be manually applied to the surface is generated using at least one template (20, 31) to be applied to the surface of the physical information carrier.

5. The method according to claim 4,
wherein the server generates the at least one template (20, 31) and transmits it to a recipient as a print template.

6. The method according to claim 4 or 5,
wherein the at least one template (20, 31) comprises a number of areas (27) to be marked and on the portable processing unit those areas (27) are displayed marked which are to be marked manually in order to provide a pattern currently allocated to the unique identifier.

7. The method according to one of the preceding claims,
wherein access of the portable processing unit to the server is enabled only if a position of the portable processing unit determined by means of a positioning system matches a position from a predetermined list of positions.

8. The method according to one of the preceding claims,
wherein only users from a predetermined list of users are allowed to access to the memory location with the use of the pattern (23).

9. The method according to one of the preceding claims,
wherein the portable processing unit requests the memory location from the server in response to a detection operation of a marker by the portable processing unit.

10. The method according to one of the preceding claims,
wherein an alphanumeric string is selected as the pattern (23).

11. The method according to one of the preceding claims, wherein a graphic pattern is selected as the pattern (23).

12. The method according to one of the preceding claims,
wherein an amount is deposited in the memory location by means of the application executed on the portable processing unit, and
wherein a token (30) to be labeled by means of the pattern (23) is selected as the physical information carrier.

13. A data management system with a server and a portable processing unit,
wherein the portable processing unit is configured by means of an application executed on the portable processing unit to request at least one memory location on the server connected in communicative fashion to the portable processing unit via a communication interface, wherein the server is configured to select a memory location on the server in response to the request for the at least one memory location by the portable processing unit and to allocate a unique identifier to the memory location, and to make the unique identifier available to the portable processing unit and optionally to at least one further processing unit,
wherein the server and/or portable processing unit are configured to allocate to the unique identifier a pattern (23) to be manually applied to a surface of a physical information carrier,
wherein the portable processing unit is configured to display the pattern (23) to a user via a display unit and to guide the user to manually apply the pattern (23), by drawing or writing the pattern using a writing device, to the surface of the physical information carrier, such that the pattern (23) to be applied to the surface of the physical information carrier links the memory location on the server to the physical information carrier,
wherein the portable processing unit or optionally at least one further processing unit, when the pattern (23) is detected and recognized on the physical information carrier using a sensor of the portable processing unit or optionally of the at least one further processing unit, is configured to download the allocation of the memory location to the unique identifier from the server and enable the one or optionally the at least one further processing unit to access the memory location using the unique identifier, and
wherein the server is configured to generate the pattern (23), using a predetermined allocation scheme and using the unique identifier, and transmit the pattern (23) to the portable processing unit requesting the memory location, or to transmit the unique identifier to the at least one portable processing unit requesting the memory location, and wherein the portable processing unit is configured to generate the pattern (23) using the unique identifier and the predetermined allocation scheme.

14. The data management system according to claim 13, wherein the physical information carrier is a token (30) and an amount of the token (30) is deposited in the memory location, and wherein the server is configured to allow only users from a predetermined list of users to access the amount deposited in the memory location.

## Revendications

1. Procédé d'affectation d'un emplacement de stockage numérique à un support d'information physique,
dans lequel, au moyen d'une application qui s'exécute sur une unité de calcul portable, un emplacement de stockage sur un serveur communiquant avec l'unité de calcul portable par l'intermédiaire d'une interface de communication est demandé par l'unité de calcul portable et mis à disposition par le serveur en réponse à la demande ;
un identifiant unique est affecté à l'emplacement de stockage par le serveur ;
un motif (23) est affecté à l'identifiant unique par le serveur et/ou l'unité de calcul portable ;
le motif (23) est présenté à un utilisateur par une unité d'affichage de l'unité de calcul portable, et l'utilisateur est guidé par l'unité de calcul portable pour appliquer le motif (23) manuellement, en le dessinant ou en l'écrivant à l'aide d'un instrument d'écriture, sur la surface d'un support d'information physique, pour que l'emplacement de stockage sur le serveur est lié au support d'information physique ;
et, lorsque le motif (23) est détecté et reconnu par le support d'information physique au moyen d'un capteur de l'unité de calcul portable ou d'au moins une autre unité de calcul, l'identifiant unique est téléchargé depuis le serveur, et l'accès à l'emplacement de stockage s'effectue au moyen de l'unité de calcul portable ou de l'au moins une autre unité de calcul en utilisant l'identifiant unique,
le motif (23) étant généré par le serveur au moyen d'un schéma d'affectation prédéfini utilisant l'identifiant unique, et transmis à l'unité de calcul portable ayant demandé l'emplacement de stockage, ou bien l'identifiant unique étant transmis par le serveur à l'au moins une unité de calcul portable ayant demandé l'emplacement de stockage et le motif (23) étant généré par l'unité de calcul portable au moyen de l'identifiant unique et du schéma d'affectation prédéfini.

2. Procédé selon la revendication 1,
dans lequel, après l'application du motif (23) sur la surface du support d'information physique, un motif appliqué sur la surface du support d'information physique est détecté par le capteur de l'unité de calcul portable et comparé avec le motif (23) associé à l'identifiant unique pour la vérification,
et dans lequel, si le motif détecté au moyen du capteur est différent du motif (23) associé à l'identifiant unique de telle sorte qu'une affectation du motif détecté au moyen du capteur à l'identifiant unique ne se passe pas correctement, un nouvel identifiant unique est demandé au serveur par l'unité de calcul portable,
et dans lequel le serveur choisit le nouvel identifiant unique, ce nouvel identifiant unique étant conçu pour être affecté à un nouveau motif (25) comprenant le motif (23) détecté au moyen du capteur, comme partie du nouveau motif (25),
et dans lequel le nouveau motif (25) est affecté au nouvel identifiant unique en utilisant le motif détecté au moyen du capteur,
et dans lequel le motif (23) appliqué sur la surface du support d'information physique est complété par l'utilisateur selon le nouveau motif (25).

3. Procédé selon la revendication 2,
dans lequel le nouveau motif (25) est généré par le serveur ou l'unité de calcul portable.

4. Procédé selon l'une des revendications précédentes,
dans lequel le motif (23) devant être appliqué manuellement sur la surface est généré au moyen d'au moins un modèle (20, 31) devant être appliqué sur la surface du support d'information physique.

5. Procédé selon la revendication 4,
dans lequel l'au moins un modèle (20, 31) est généré par le serveur et transmis à un destinataire en tant que modèle d'impression.

6. Procédé selon la revendication 4 ou 5,
dans lequel l'au moins un modèle (20, 31) comprend un nombre de champs (27) à marquer et l'unité de calcul portable présente le marquage des champs (27) qui doivent être marqués à la main afin qu'un motif actuellement affecté à l'identifiant unique puisse être mis à disposition.

7. Procédé selon l'une des revendications précédentes,
dans lequel un accès de l'unité de calcul portable au serveur n'est autorisé que si une position de l'unité de calcul portable déterminée au moyen d'un système de localisation correspond à une position figurant sur une liste de positions prédéfinie.

8. Procédé selon l'une des revendications précédentes,
dans lequel seuls les utilisateurs figurant sur une liste d'utilisateurs prédéfinie sont autorisés à accéder à l'emplacement de stockage en utilisant le motif (23).

9. Procédé selon l'une des revendications précédentes,
dans lequel l'emplacement de stockage est demandé par l'unité de calcul portable au serveur en réponse à une opération de saisie d'un marqueur par l'unité de calcul portable.

10. Procédé selon l'une des revendications précédentes,
dans lequel le motif (23) est une série de caractères alphanumériques.

11. Procédé selon l'une des revendications précédentes, dans lequel le motif (23) est un motif graphique.

12. Procédé selon l'une des revendications précédentes,
dans lequel, au moyen de l'application qui s'exécute sur l'unité de calcul portable, une valeur est déposée à l'emplacement de stockage et
un jeton (30) devant être marqué au moyen du motif (23) est choisi en tant que support d'information physique.

13. Système de gestion de données, comportant un serveur et une unité de calcul portable,
l'unité de calcul portable étant configurée au moyen d'une application qui s'exécute sur l'unité de calcul portable de manière à demander au moins un emplacement de stockage sur le serveur communiquant avec l'unité de calcul portable par l'intermédiaire d'une interface de communication, ledit serveur étant configuré de manière à choisir un emplacement de stockage sur le serveur en réponse à la demande de l'au moins un emplacement de stockage, transmise par l'unité de calcul portable, et à affecter à l'emplacement de stockage un identifiant unique et à rendre l'identifiant unique disponible pour l'unité de calcul portable et éventuellement au moins une autre unité de calcul,
le serveur et/ou l'unité de calcul portable étant configurés de manière à affecter à l'identifiant unique un motif (23) devant être appliqué manuellement sur une surface d'un support d'information physique,
l'unité de calcul portable étant configurée de manière à présenter le motif (23) à un utilisateur par une unité d'affichage et à guider l'utilisateur pour appliquer manuellement le motif (23), en dessinant ou en écrivant le motif à l'aide d'un instrument d'écriture, sur la surface du support d'information physique, de sorte que l'emplacement de stockage sur le serveur est lié au support d'information physique au moyen du motif (23) appliqué sur la surface du support d'information physique,
l'unité de calcul portable ou éventuellement au moins une autre unité de calcul étant configurée de manière à télécharger depuis le serveur l'affectation de l'emplacement de stockage à l'identifiant unique, lorsque le motif (23) est détecté et reconnu par le support d'information physique au moyen d'un capteur de l'unité de calcul portable ou éventuellement de l'au moins une autre unité de calcul, et à permettre à l'unité de calcul ou éventuellement à l'au moins une autre unité de calcul d'accéder à l'emplacement de stockage en utilisant l'identifiant unique, et
le serveur étant configuré de manière à générer le motif (23) au moyen d'un schéma d'affectation prédéfini et en utilisant l'identifiant unique, et à le transmettre à l'unité de calcul portable ayant demandé l'emplacement de stockage, ou bien de manière à transmettre l'identifiant unique à l'au moins une unité de calcul portable demandant l'emplacement de stockage, et l'unité de calcul portable étant configurée de manière à générer le motif (23) au moyen de l'identifiant unique et du schéma d'affectation prédéfini.

14. Système de gestion de données selon la revendication 13, dans lequel le support d'information physique est un jeton (30) et une valeur du jeton (30) est déposée à l'emplacement de stockage, et dans lequel le serveur est configuré de manière à permettre uniquement aux utilisateurs figurant sur une liste d'utilisateurs prédéfinie d'accéder à la valeur déposée à l'emplacement de stockage.
